# EUROPEAN PATENT SPECIFICATION

(11) **EP 3 825 389 B1**
(45) Date of publication and mention of the grant of the patent: **24.07.2024**
(21) Application number: 19210629.2
(22) Date of filing: 21.11.2019
(51) Int. Cl.: C11B 1/04, C11B 1/06, C11B 13/00

(54) **A METHOD FOR PRODUCING CRUDE PALM OIL FROM A PALM-OIL CONTAINING RAW MATERIAL AND A SYSTEM FOR THE PRODUCTION OF CRUDE PALM OIL**
VERFAHREN ZUR HERSTELLUNG VON ROHEM PALMÖL AUS EINEM PALMÖLHALTIGEN ROHSTOFF UND SYSTEM ZUR HERSTELLUNG VON ROHEM PALMÖL
PROCÉDÉ DE PRODUCTION D'HUILE DE PALME BRUTE À PARTIR D'UNE MATIÈRE PREMIÈRE CONTENANT DE L'HUILE DE PALME ET SYSTÈME DE PRODUCTION D'HUILE DE PALME BRUTE

(43) Date of publication of application: 26.05.2021
(73) Proprietor: Alfa Laval Corporate AB, 221 00 Lund (SE)
(72) Inventor: HUKKERIKAR, Amol, DK-2980 KOKKEDAL (DK)
(74) Representative: Alfa Laval Attorneys

(56) References cited:
- LATIF AHMAD ET AL: "Water recycling from palm oil mill effluent (POME) using membrane technology", DESALINATION, ELSEVIER, AMSTERDAM, NL, vol. 157, no. 1-3, 1 August 2003 (2003-08-01), pages 87 - 95, XP005330291, ISSN: 0011-9164, DOI: 10.1016/S0011-9164(03)00387-4
- CHAVALPARIT O ET AL: "OPTIONS FOR ENVIRONMENTAL SUSTAINABILITY OF THE CRUDE PALM OIL INDUSTRY IN THAILAND THROUGH ENHANCEMENT OF INDUSTRIAL ECOSYSTEMS", ENVIRONMENT, DEVELOPMENT AND SUSTAINABILITY ; A MULTIDISCIPLINARY APPROACH TO THE THEORY AND PRACTICE OF SUSTAINABLE DEVELOPMENT, KLUWER ACADEMIC PUBLISHERS, DO, vol. 8, no. 2, 28 March 2006 (2006-03-28), pages 271 - 287, XP019395301, ISSN: 1573-2975, DOI: 10.1007/S10668-005-9018-Z
- CHUNGSIRIPORN J ET AL: "Minimization of water consumption and process optimization of palm oil mills", CLEAN TECHNOLOGIES AND ENVIRONMENTAL POLICY, SPRINGER, BERLIN, DE, vol. 8, no. 3, 2 February 2006 (2006-02-02), pages 151 - 158, XP019386793, ISSN: 1618-9558, DOI: 10.1007/S10098-005-0002-Y
- AMOSA MUTIU KOLADE ET AL: "Technical feasibility study of a low-cost hybrid PAC-UF system for wastewater reclamation and reuse: a focus on feedwater production for low-pressure boilers", ENVIRONMENTAL SCIENCE AND POLLUTION RESEARCH INTERNATIONAL, ECOMED, LANDSBERG, DE, vol. 23, no. 22, 24 August 2016 (2016-08-24), pages 22554 - 22567, XP036095986, ISSN: 0944-1344, [retrieved on 20160824], DOI: 10.1007/S11356-016-7390-X

## Description

### Technical field

The present disclosure relates to a method for producing crude palm oil from a palm-oil containing raw material and a system for the production of crude palm oil. More specifically, the disclosure relates to a method for producing crude palm oil from a palm-oil containing raw material and a system for the production of crude palm oil as defined in the introductory parts of the independent claims.

### Background art

Palm oil is one of the world's most produced and consumed oils and is used in a wide variety of food, cosmetic and hygiene products, and can be used as source for bio-fuel or bio-diesel. Crude Palm Oil (CPO) is extracted from the mesocarp of the fruitlets of Fresh Fruit Bunch (FFB) while Palm Kernel Oil is obtained from the Kernel. Palm oil is produced for example in countries like Malaysia, Indonesia, Thailand, Colombia and some other tropical regions in large amounts. However, large production of palm oil results in a large amount of Palm Oil Mill Effluent (POME). To process 1 ton (1000 kg) of FFB, about 1.5 cubic meters of process water is used mainly for the operation of boilers and hydro cyclone separators in palm oil mills. In the milling processes, about 50% (0.75 Cubic meters) of the process water used will eventually become POME.

POME can be divided into different categories depending on the source, such as a sterilizer condensate, clarification wastewater, and hydrocyclone wastewater, for example in a ratio of 9:15:1 (W. I. Liew et al.: "Conventional method and emerging wastewater polishing technologies for palm oil mill effluent treatment,: A review"; Journal of Environmental Management 149 (2015) p. 222-235). POME is a thick, brownish colloidal mixture of water, oil, and fine suspended solids. In the mill, the POME is hot (about 80-90°C) and possess a very high Biological Oxygen Demand (BOD). Owing to the high pollution load in POME, an efficient treatment method for POME to comply with local environmental regulations has become a pre-requisite for sustainable and successful operation of palm oil mills.

Ponding systems, comprising of a series of anaerobic, facultative, and aerobic ponds, have been employed by most of the palm oil mills as POME treatment method. Ponding in general includes waste stabilization lagoons and oxidation ponds. The ponding systems have low maintenance requirement and are simple in operation. However, they require huge land area and long retention times. In terms of dimensions, an example of a typical size of an anaerobic pond is about 60 m x 29.6 m x 5.8 m (length x width x depth) for a palm oil mill processing about 54 tons per hour of FFB (W. I. Liew et al.: "Conventional method and emerging wastewater polishing technologies for palm oil mill effluent treatment,: A review"; Journal of Environmental Management 149 (2015) p. 222-235). Further, the ponding systems release methane gas into atmosphere leading to Greenhouse Gas (GHG) emissions. A further drawback is inefficient treatment of POME, since there is often no recovery of by-products and wastage of lands used for ponding.

Recently, a POME treatment method based on an anaerobic method and biogas production has been developed as disclosed for example in WO2013169091. The biogas produced can be used to generate electricity or can be used as a boiler fuel. Wastewater of POME can be treated by membrane separation comprising series of ultra filtration and reverse osmosis systems to provide clean water which can be recycled to a mill boiler. Thus, cleaning of water by ultra filtration and reverse osmosis is required before the water can be reused in the mill boiler.

In the prior art, there have been attempts to improve methods for treating POME, and WO2016129986 discloses an example process in which first solids, water and oil are removed from the POME sequentially. The water, which is removed from POME by evaporation, can be recycled to the mill process or boiler. However, there is no disclosure given as to where in the process and how the removed water can be reused.

WO2015/037980 discloses another example of a zero liquid discharge palm oil clarification process in which free water is removed by evaporation from a feed liquor consisting of a mixture of palm oil, free water, bound water, suspended solids, dissolved solids and gums. However, there is no disclosure about re-using the evaporated water discharged in the form of process condensate.

LATIF AHMAD ET AL: "Water recycling from palm oil mill effluent (POME) using membrane technology" DESALINATION ELESEVIER, AMSTERDAM, NL, vol. 157, no. 1-3, 1 August 2003 (2003-08-01), pages 87-95, XP005330291, ISSN: 0011-9164, DOI: 10.1016/50011-9164(03)00387-4, discloses the use of a hybrid adsorption-membrane system to produce high-quality treated water from POME that can be used as boiler feed water for sterilization of fresh fruit bunch processing. However, the high-quality water as feed for the boiler must be carefully cleaned to comply with the requirements of boiler water, which makes the palm oil process both complicated and costly.

In view of the above, there is a need to effectively tackle the POME to reduce the pollution load on the environment and at the same time improve the operational efficiency of palm oil mill processes. Further, there is a need for a simple, robust, and cost-effective method and system for handling POME that can be employed in existing palm oil mills as well as in new mills.

### Summary

In addition to the problem of finding an efficient way to handle the environmental load caused by POME, a problem of recovery of by-products and efficient resource utilization in palm oil production has been realized. For example, it has been noted that fresh water as a resource should be more efficiently utilized.

Faced with the problems above, it is an objective of the present disclosure to mitigate, alleviate or eliminate one or more of the above-identified deficiencies and disadvantages and solve at least the above-mentioned problems.

Especially, it is an objective to provide an efficient and economic method and system for producing crude palm oil by which recovery of by-products and efficient resource utilization can be obtained.

Furthermore, it is an objective to provide a method and system for treating POME, which can assist palm oil mills to realize zero effluent discharge.

Additionally, it is an objective to provide a method and system which enable reduction of operating costs in palm oil mills.

The objectives above are attained according to a first aspect of the present invention, which relates to a method for producing crude palm oil from a palm-oil containing raw material comprising fresh fruit bunches (FFB), the method comprising receiving and feeding the palm-oil containing raw material to a sterilizer, sterilizing the raw material in the sterilizer by means of steam, threshing the raw material in a thresher, digesting fruits in a digester and pressing the fruits in a press to extract crude palm oil, clarifying the extracted crude palm oil in a clarifying tank and drying the extracted crude palm oil in a drier. During the production a palm oil mill effluent (POME) is generated as a residual sludge. The method further comprises:
(a) Separating water and solids from at least part of the palm oil mill effluent (POME) by using a POME separator;
(b) Feeding at least part of the separated water to a steam generator;
(c) Generating steam in the steam generator using the separated water; and
(d) Feeding the generated steam to the sterilizer.

According to the present method, the sterilizer may use the steam generated from the water available in the POME. By using the steam generator, a way to recycle the separated water from the POME within the mill has been found, and hence the problem of discharge of separated water from POME outside the palm oil mill is minimized or eliminated. Thus, zero liquid discharge can be achieved, since the separated water is kept in a closed loop within the palm oil mill. Additionally, by using the steam generated from the POME, it is possible to replace a motive steam supplied by a boiler of a palm oil mill using fresh water in sterilizing the raw material, FFB. Thereby, fresh water consumption may be reduced.

The method may further comprise a step (e) of processing the solids from the POME separator to produce oil-containing by-products or to recover a part of the oil present in the solids. In this way the environmental load can be further decreased.

The method further comprises feeding motive steam generated in a mill boiler to the steam generator. The steam generator is a separate device from the mill boiler. Thus, the steam generator is configured to utilize the separated water from the POME. The steam generator is configured to be simpler than a mill boiler and more suitable to handle the quality of separated of water from POME.

In the method, the POME separator used in the step (a) may comprise a thermal separator. The method may thus further comprise feeding motive steam from the mill boiler to the thermal separator. The mill boiler may comprise an industrial boiler comprising a heat source and a heat exchanger.

The steam generator may comprise at least one of a plate heat exchanger, a shell and tube heat exchanger or a spiral heat exchanger, or a combination thereof. Thereby a customized steam generator may be provided for steam generation using separated water from POME.

The method may further comprise directly injecting the generated steam (C) onto the oil-containing raw material comprising Fresh Fruit Bunches (FFB) in the sterilizer. Thus, the steam generated by the mill boiler can be replaced by the generated steam (C) from POME water directly in the process.

The method may further comprise utilizing the generated steam (C) from water in POME in the digester downstream of the sterilizing and upstream of the pressing arrangement and/or clarification tank downstream of the digester and the pressing arrangement.

The use of generated steam from water in POME in sterilizing and Digestion process helps to decreases the use of motive steam being supplied by mill boiler of palm oil mill, which in turn reduces the fresh feed water in the mill boiler leading to lower operating cost of palm oil mill.

The above-mentioned objectives can also be achieved by a system for the production of crude palm oil according to the present invention. The system comprises:
a device for receiving and feeding a palm-oil containing raw material to a sterilizer configured to utilize steam for the sterilizing,
downstream of the sterilizer a thresher unit to separate fruits from the raw material,
downstream of the thresher unit a digester unit for digesting the fruits
downstream of the digester unit a pressing arrangement for the extraction of palm oil from the digested fruits,
downstream of the pressing arrangement an oil clarification tank,
downstream of the oil clarification tank a crude oil separator, and
downstream of the crude oil separator a dryer unit, such as a vacuum dryer, to produce crude palm oil.
The system further comprises:
a POME separator for the separation of water (A) and solids (B) from a palm oil mill effluent (POME), produced as a residual sludge during the production of the crude palm oil,
a steam generator configured to generate steam (C) from the water (A) separated from the palm oil mill effluent (POME), and
a feeding arrangement to feed the generated steam (C) to the sterilizer.

The system further comprises a mill boiler configured to generate and supply motive steam to the steam generator. This means that the mill boiler is configured to supply the necessary energy required by the steam generator. The steam generator is a separate device from the mill boiler. In this way, it is possible to configure the steam generator such that it can use the water (A) separated from the POME instead of fresh water.

The POME separator may comprise at least one of a thermal separator comprising an evaporator and/or a distillation column, a physical separator comprising a membrane separator, a decanter and/or a centrifugal separator, or a combination thereof. The separator may thus be adapted to the process in a flexible way.

According to a variant, the POME separator is a thermal separator comprising an evaporator, and the mill boiler is configured to generate and supply motive steam to the thermal separator. By using a thermal separator, an effective way of separating the water from the POME is provided. The mill boiler may be used to generate and supply necessary energy required by the thermal POME separator. Thereby, the mill boiler used in the system to provide steam for various purposes may be additionally used in the separation process.

The evaporator may be a single-effect or multiple-effect evaporation system, installed and operated as single or multiple units in series or in parallel. Evaporator of this type provide a clear solid and water fraction in an effective way.

In addition to the sterilizer, the digester unit and/or the clarification tank may be configured to receive and utilize the generated steam. Therefore, steam generated by the mill boiler may be completely or at least partially replaced by the generated steam (C) in the sterilizer, the digester unit and the clarification tank.

The steam generator may comprise at least one of a plate heat exchanger, a shell and tube heat exchanger or a spiral heat exchanger, or a combination thereof. The pressure of the generated steam (C) may be in the range of 0 Barg to 50 Barg.

The sterilizer may comprise an injector device configured to inject the generated steam (C) onto the oil-containing raw material.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the appended claims.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a prior art crude palm oil production system;
Figure 2 shows an example of the crude palm oil production system according to the present disclosure.

### Detailed description

The present disclosure will now be described with reference to the accompanying drawings, in which examples of the disclosure are shown. The disclosure may, however, be embodied in other forms and should not be construed as limited to the herein disclosed examples. The disclosed examples are provided to fully convey the scope of the disclosure as defined in the appended claims to the skilled person.

The method of producing crude palm oil described in the present disclosure comprises the steps of receiving and feeding the palm-oil containing raw material comprising fresh fruit bunches (FFB) to a sterilizer, sterilizing the raw material by means of steam, threshing the raw material in a thresher unit, digesting fruits in a digester unit, and pressing the fruits in a pressing arrangement to extract palm oil from the digested fruits, clarifying the extracted palm oil and drying the extracted palm oil to produce crude palm oil. During the production a palm oil mill effluent (POME) is generated as a residual sludge. The residual sludge is generated in one or more process steps as described more in detail below.

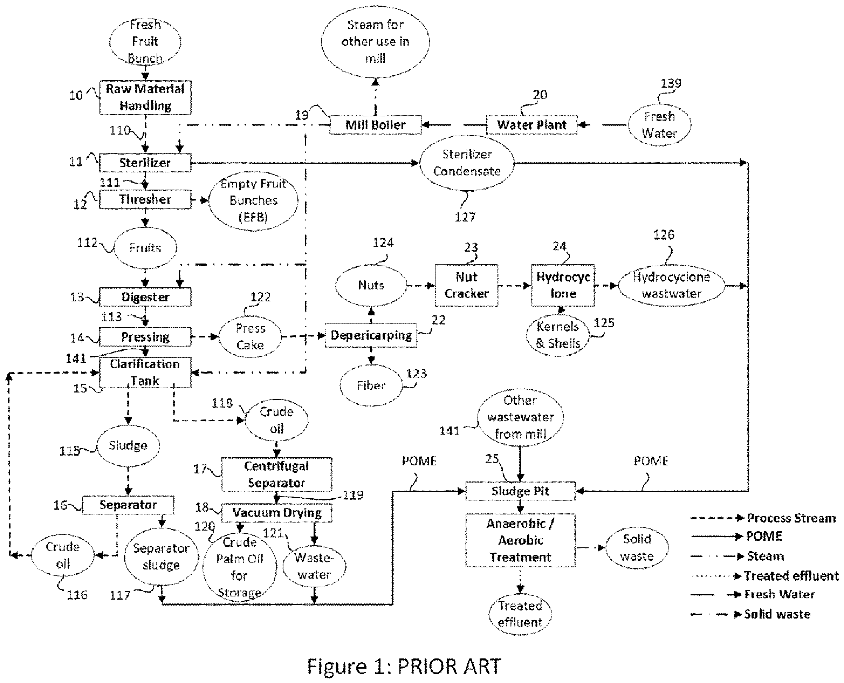

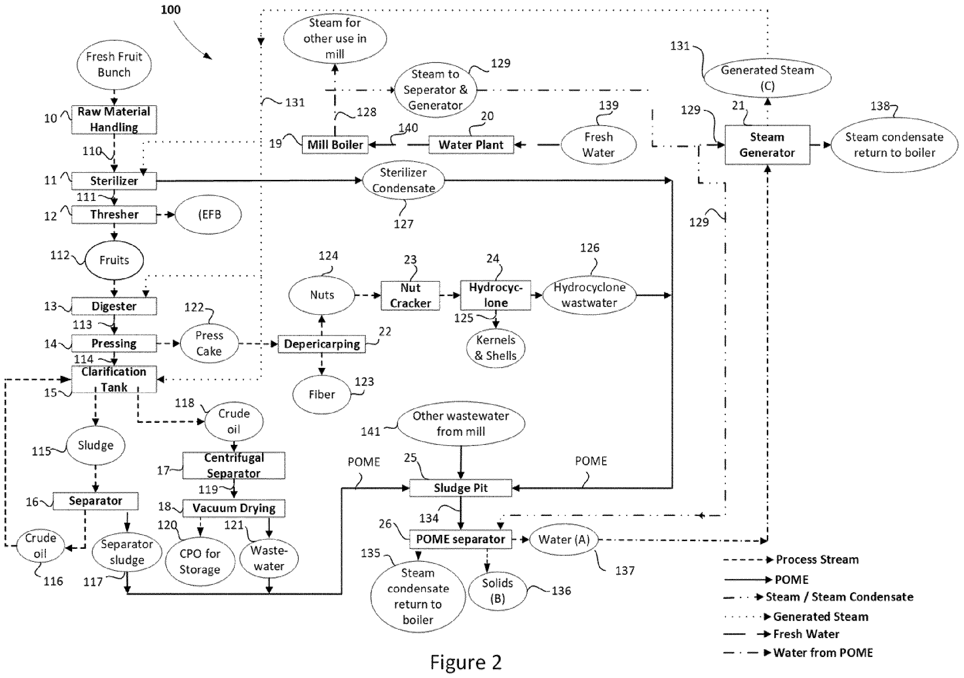

Reference is made now made to Fig. 1 showing a prior art system for the production of crude palm oil and to Fig. 2, in which an example of a system for the production of crude palm oil according to the present disclosure is schematically shown. The system 100 comprises a device 10 for receiving a palm-oil containing raw material, from which the crude palm oil is derived. The device 10 may be of any suitable type, for example a container and/or a hopper. The device 10 may also comprise a feeding arrangement, so that the received raw material can be forwarded to downstream process steps. The feeding arrangement may be based on gravity, or different types of conveyors, for example screw conveyors, may be used for supplying the raw material 110 to a first processing step of sterilizing in a sterilizer 11. The palm-oil containing raw material may comprise or consist of fresh fruit bunches (FFB) of palm oil trees. During the production of the crude palm oil, the raw material is processed so that the palm oil is extracted. Palm kernels and shells are also obtained as a product from the milling process.

In the step of sterilizing in the sterilizer 11, the palm-oil containing raw material 110 comprising or consisting of FFB is sterilized by using steam as the heating medium. In the below description, when describing the palm-oil containing raw material, FFB is used for the sake of clarity, but any palm-oil containing raw material comprising or consisting of the FFB is meant.

The sterilizer 11 may be of any suitable type, such as a horizontally or vertically positioned cylindrical pressure vessel. Such pressure vessels are filled with steam, for example by injection, under pressure and the sterilizing can be performed as a batch process. The temperature in the horizontal and vertical sterilizers may vary from about 140 to 150°C and the pressure may be about 1.5-4.5 bar. The sterilizing time may vary and can be from e.g. 20 min to 70 minutes, for example. In case of a horizontal sterilizer, The FFB may be stacked for example in cages across the length of the vessel and the steam can be injected to the interior of the vessel. In vertical sterilizers, the FFB may be stacked into the vessel without cages. The vertical sterilizers are space-saving but may require a higher pressure or sterilizing time than the horizontal sterilizers due to a higher FFB stack inside the vessel. Alternatively, continuous sterilizers can be used. In continuous sterilizers the sterilizing is carried out in a heating cabin subjected with steam at atmospheric pressure as a continuous process. The FFB may be crushed before it is transported through the heating cabin to facilitate steam penetration. In the heating cabin, the FFB is exposed to steam at atmospheric pressure. The POME 127 generated in sterilizer unit is referred to as a sterilizer condensate from the steam and is sent to a sludge pit 25 for its treatment.

In the above-exemplified sterilizers, the process steam consumption may vary between e.g. 100 to 400 kg per tonne FFB, depending on the type of sterilizing. Regardless of the type of sterilizing, the FFB sterilizing requires a considerable amount of steam. As mentioned above in the background section, the steam has traditionally been generated in a mill boiler, which requires use of a large amount of fresh water. By fresh water is meant water that is not salty, and/or water, which is considered suitable for consumption as for example watering of plants and/or as drinking water. The biological oxygen demand (BOD) limit value of the fresh water may generally be lower than the BOD value of an unpurified water (A) separated from the POME. According to the method and system of the present disclosure, the usage of the fresh water can be considerably decreased.

Downstream of the sterilizing, the sterilized raw material 111 may be supplied to a thresher unit 12 for the removal of fruit 112 from the raw material comprising the FFB. Empty fruit bunches (EFB) may be subjected to incineration to generate an extra source of energy or can be conveyed to plantation ground as raw fertilizers.

Downstream of the thresher unit 12, a digester unit 13 is provided. The fruit 112 from the thresher unit 12 may thus be supplied to the digester unit 13, in which palm oil is released in the fruit by rupturing or breaking down oil-bearing cells. The rupturing or breaking action can be obtained by mechanical beaters or stirrers, which are arranged to pound the threshed fruits. The digester unit 13 may be a cylindrical vessel, which can be heated e.g. by using steam.

From the digester unit 13, the digested fruit 113 is supplied to a pressing arrangement 14 located downstream of the digester unit 13. Thus, the digester unit 13 and the thresher unit 12 are located upstream of the pressing arrangement 14. In the pressing arrangement 14, oil 114 is pressed from the digested fruit 113 and is fed to the clarification tank 15 for clarifying the extracted palm oil. Mechanical presses may be included in the pressing arrangement 14. A press cake 122 comprising solids resulting from the pressing operation is further supplied to a depericarping process 22, in which fibers 123 and nuts 124 are obtained. The nuts 124 are then supplied to a nutcracker 23 and further to a hydrocyclone 24 to separate kernels and shells 125 and hydrocyclone wastewater 126. The hydrocyclone wastewater is comprised in the POME of the palm oil mill and is supplied to the sludge pit 25 for its treatment.

In the clarification tank 15, the extracted oil 114 pressed from the fruit is clarified and/or separated. Thus, the oil clarification process comprises settling of the oil in the clarification tank 15. The clarification tank may be of any type, for example a horizontal type tank. The extracted oil 114 coming out of the pressing arrangement 14 comprises a mixture of palm oil, water, cell debris, fibrous material and solids. The fluid is normally thick and has a high viscosity. Therefore, hot water or steam may be added to the extracted palm oil 114 from the pressing arrangement 14 to lower the viscosity. In this way, the solids, which are heavier than the water and oil, fall to the bottom of the clarification tank 15, while the lighter oil settles above a water layer. From the clarification tank 15, the extracted palm oil, i.e. the crude oil 118 is then supplied to a crude oil separator 17, which may be a centrifugal separator. The remaining liquor or sludge 115 containing solids from the clarification tank 15 is supplied to a sludge separator 16, in which solids are separated to a separator sludge 117. The separator sludge 117, which is POME, is sent to the sludge pit 25 for its treatment. The separated crude oil 116 from the sludge separator 16 can be returned back to the clarification tank 15 for further recovery.

An oil fraction 119 separated in the centrifugal crude oil separator 17 is supplied to a dryer unit 18, which may be a vacuum dryer, and located downstream of the centrifugal crude oil separator 17. To prevent generation of extensive amounts of free fatty acids (FFA), which may occur through autocatalytic hydrolysis of the oil, the moisture content of the oil is preferably reduced. The water content may be reduced to for example from 0.15 to 0.25 percent by weight. Thus, the oil fraction from the clarification tank 15 is supplied to a vacuum dryer 18 to reduce the water content of the crude oil. The final crude palm oil (CPO) 120 from the vacuum drying 18 is sent to storage. Any wastewater generated in the vacuum drying section can be sent to the sludge pit 25 for its treatment. The sludge pit 25 is used as a POME collection tank. It is configured to receive POME generated 127 in the sterilizing process 11, POME generated 126 in the hydrocyclone process 24, POME generated 117 in the sludge separation process 16, and POME 121, 141 generated as waste water in other sections of the palm oil mill. The palm oil mill effluent POME may thus comprise effluents generated during one or more of the method steps including sterilizing, digesting, pressing, oil clarification, drying, and hydrocyclone operation.

Reference is now made to Fig. 1, in which a prior art system to produce crude palm oil is shown. The prior art system of Fig. 1 may comprise the devices upstream of the sludge pit 25 as described above, i.e. a device for receiving and supplying a palm-oil containing raw material to a sterilizer, a thresher, digester, pressing arrangement, oil clarification tank and a vacuum dryer. In this illustrated prior art process, a mill boiler using fresh water is used to provide steam to the sterilizing step. The POME generated in the sterilizing process, hydrocyclone process, separation process and generated as wastewater in other sections of the palm oil mill is collected in a sludge pit. However, in the prior art system the collected POME from the sludge pit is transferred to an anaerobic treatment plant. The POME can be further treated in the anaerobic ponds to reduce the Biological Oxygen Demand (BOD), i.e. the measured amount of oxygen needed for bacteria to degrade the organic components present in the POME. The treated POME is then discharged.

According to the present disclosure, the drawbacks of the prior art system mentioned in the background section can be overcome. According to the present method and system, the POME can be effectively processed and utilized further in the palm oil mill. Further, fresh water consumption in the mill boiler can be significantly reduced, which is a huge advantage especially in countries where fresh water is a scarce commodity. Additionally, it is possible to generate solids from the POME, which can be further processed to produce useful by-products such as crude oil. The present invention thus assists palm oil mills in achieving environmental compliance and sustainable production of crude palm oil.

The drawbacks can be overcome and the advantages above attained by the present system, which is now further described with reference to Fig. 2.

According to the present disclosure, a POME separator 26 for the separation of water (A) and solids (B) from the collected POME 134 in the sludge pit 25 is included in the system. The POME separator 26 may be a physical and/or a thermal separator. The physical separator may be for example a membrane separator, a decanter, a centrifugal separator, or a combination thereof. The thermal separator may be or comprise a distillation column and/or an evaporator, for example a single-effect or multiple-effect evaporation system. Such evaporator/evaporators may be installed and operated as single or multiple units in series or in parallel.

In case the POME separator 26 is a thermal separator, the thermal separator may use a motive steam from the mill boiler 19. The steam condensate 135 generated during the thermal separation can be returned to the mill boiler 19 of the palm oil mill for efficient recovery of condensate. The separated solids (B) 136 from separator 26 may be further processed to produce oil-containing by-products or to recover a part of the oil present in the solids (B).

The separated water (A) from the POME separator 26 is supplied to a steam generator 21, which is configured to generate steam from the water (A) separated from the POME 134. The steam generator 21 is a separate device from the mill boiler 19, which provides motive steam to the steam generator 21. A steam condensate 138 produced in the steam generator 21 may be returned to the mill boiler 19 of the palm oil mill for efficient recovery of condensate. The steam generator 21 is suitably configured to handle feed water having BOD higher than that of fresh water used in the mill boiler. The mill boiler 19 on the other hand is configured to use fresh water for steam generation. The steam generator 21 may comprise at least one of a plate heat exchanger, a shell and tube heat exchanger or a spiral heat exchanger, or a combination thereof.

The mill boiler 19 may be an industrial boiler comprising a heat source and a heat exchanger. In conventional boilers a certain minimum feed-water quality is required. Water tube boilers and fire-tube boilers are two common type of mill boilers in palm oil mills. For such mill boilers it is important that the feed water quality is maintained as per the standard set by a supplier and/or authority, who inspects the mill boiler on regular basis. A bad quality feed water can damage the tubes of the mill boiler leading to mechanical damage of the mill boiler and such damages can be very expensive to the customer. Hence, for safety of mill boiler and longer lifespan, the quality of the feed water to the mill boiler is maintained according to the standard. In the system for the production of palm oil, fresh water 139 may be supplied to a water plant 20, and from the water plant, the feed-water 140 having required quality is supplied to the mill boiler for the generation of fresh water steam 128. This steam 128 can be utilized in the palm oil mill in applications requiring a determined quality.

The separated water (A) 137 from the POME 134 contains a certain level of Biological Oxygen Demand (BOD). Hence, this separated water (A) is generally not preferable for use in the mill boiler 19. The steam generator 21 used according to the present invention is configured to generate steam using the separated water (A) 137 from POME. The steam generator 21 does not need to pass any specific criteria of water quality and it can handle the incoming quality of separated water (A) 137 from POME, without compromising on safety and lifespan of the steam generator 21. For example, a plate heat exchanger based evaporation system can be used to receive the separated water (A) 137 from POME and produce steam at a required pressure in the sterilizer unit 11. The pressure of the generated steam may be in the range of 0 Barg to 50 Barg.

The system 100 of the present disclosure also comprises the mill boiler 19 to generate motive steam 129 to the steam generator 21 and/or to the POME separator 26, in case the POME separator is a thermal separator. This means that the mill boiler 19 is configured to supply the necessary energy required by the steam generator 21. The steam generated by the steam generator (C) 131 is mainly used in the step of sterilizing in the sterilizer 11 and in the clarification tank 15. However, the digester unit 13 may also be configured to receive and utilize the generated steam (C) 131 in the digester unit 13. The system 100 comprises a feeding arrangement to feed the generated steam (C) 131 to the sterilizer 11. The feeding arrangement may be used to feed the generated steam additionally to the oil clarification tank 15 or digester unit 13. The feeding arrangement may comprise necessary pipes, valves and/or pumps.

Further, the sterilizer 11 may use the generated steam (C) 131 "directly", i.e. the steam (C) 131 is injected directly onto the palm fruits. After coming in direct contact with the FFB, the generated steam (C) 131 gets condensed and becomes dirty. This dirty condensate 127 is one source for the generation of POME. Hence, when the mill boiler 19 supplies the motive steam 128 to the sterilizer, as in the prior art shown in Fig. 1, the motive steam 128 is directly injected onto palm fruits and the result is dirty condensate. Instead of using the motive steam 128 from the mill boiler 19 using fresh water, according to the present invention the steam (C) 131 generated from the steam generator 21 is used in the sterilizer 11, whereby it is possible to avoid usage of the motive steam 128 from the mill boiler 19 in the sterilizer 11. More importantly, by using the steam generator 21, a way to recycle the separated water (A) within the palm oil mill has been found, and hence the problem of discharge of separated water (A) 137 outside the palm oil mill is minimized or eliminated. Thus, by the re-use of the separated water (A) 137 in the steam generator 21 it may be possible to achieve zero liquid discharge, i.e. the separated water (A) 137 is not discharged outside the mill, but is kept in a closed loop within the palm oil mill.

The present disclosure also relates to a method for producing crude palm oil from a palm-oil containing raw material. The method comprises receiving and feeding the palm-oil containing raw material to a sterilizer, sterilizing the raw material in the sterilizer by means of steam, threshing the raw material in a thresher, digesting fruits in a digester and pressing the fruits in a press to extract crude palm oil, clarifying the extracted crude palm oil in a clarifying tank, separating the extracted palm oil in a crude oil separator and drying the extracted crude palm oil in a drier. These method steps can be performed in the system as described above, although the system configuration may also vary and is not limited to the above-described variant. During the production, a palm oil mill effluent (POME) is generated as a residual sludge, especially from the sterilizing and oil separation steps.

In the first step a) of the method, water (A) and solids (B) are separated from at least part of the palm oil mill effluent (POME) by using a POME separator 26, which may be a thermal and/or physical separator.

In the next step b) at least part of the separated water (A) is fed to a steam generator 21. Preferably, all of the separated water is fed directly to the steam generator. However, the method may comprise passing at least part of the water (A) separated from the palm oil mill effluent (POME) through other treatment process/es before transferring it to the step (c) of generating the steam (C) from the separated water (A). The other treatment processes may comprise water treatment processes, for example reverse osmosis, or adsorption, which helps to purify the water. However, such water treatment processes may be omitted in the method and system of the present disclosure, since the steam generator 21 used for steam generation in the step c) is suitable for the quality of the separated water (A). In the step c) the steam is generated in the steam generator 21 by using the separated water (A). The pressure of the generated steam (C) may be in the range of 0 Barg to 50 Barg.

The method comprises feeding motive steam generated in a mill boiler 19 to the steam generator 21. As described above, the steam generator 21 is a separate device from the mill boiler 70.

According to the present invention, the generated steam (C) is provided to the sterilizer so that it can be used for the sterilizing. In this way, it is possible to obtain a closed loop for the POME water in the oil mill. Further, the use of fresh water can be reduced, since the steam for the sterilizing does not have to be generated in the mill boiler using fresh water. Thus, the need to discharge the water (A) separated from POME to nature is considerably decreased or eliminated. The method may further comprise directly injecting the generated steam (C) onto the oil-containing raw material comprising Fresh Fruit Bunches (FFB) in the sterilizer 11. Additionally, the method may further comprise utilizing the generated steam (C) in the digester 14 downstream of the sterilizer 11 and upstream of the pressing arrangement 14 and/or clarification tank 15 downstream of the digester and the pressing arrangement 14.

The method may further optionally comprise a step e) of processing the solids (B) from the separation step (a) to produce oil-containing by-products or to recover a part of the oil present in the solids (B). In this way, the total environmental load of palm oil mills can be further reduced.

The person skilled in the art realizes that the present disclosure is not limited to the examples described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A method for producing crude palm oil from a palm-oil containing raw material comprising fresh fruit bunches (FFB), receiving and feeding the fresh fruit bunches (FFB) to a sterilizer (11), sterilizing the raw material in the sterilizer (11) by means of steam, threshing the fresh fruit bunches (FFB) in a thresher unit (12), digesting fruits in a digester unit (13), and pressing the fruits in a pressing arrangement (14) to extract palm oil from the digested fruits, clarifying the extracted palm oil in a clarification tank (15), separating the extracted palm oil in a crude oil separator (17), and drying the extracted palm oil in a dryer unit (18) to produce crude palm oil, whereby during the production a palm oil mill effluent (POME) is generated as a residual sludge, and the method further comprises:
(a) Separating water (A) and solids (B) from at least part of the palm oil mill effluent (POME) by using a POME separator (26);
(b) Feeding at least part of the separated water (A) to a steam generator (21);
(c) Generating steam (C) in the steam generator (21) by using the separated water (A);
(d) Feeding the generated steam (C) to the sterilizer (11), wherein
the method further comprises feeding motive steam generated in a mill boiler (19) to the steam generator (21), and wherein the steam generator (21) is a separate device from the mill boiler (19).

2. The method according to claim 1, further comprising a step (e) of processing the solids (B) from the POME separator (26) to produce oil-containing by-products or to recover a part of the oil present in the solids (B).

3. The method according to any one of claims 1 or 2, wherein the POME separator (26) used in the step (a) comprises a thermal separator, and wherein the method further comprises feeding motive steam from the mill boiler (19) to the thermal separator (26).

4. The method according to any one of Claims 1, 2 or 3, wherein the mill boiler (19) comprises an industrial boiler comprising a heat source and a heat exchanger.

5. The method according to any one of the preceding Claims, wherein the steam generator (21) comprises at least one of a plate heat exchanger, a shell and tube heat exchanger or a spiral heat exchanger, or a combination thereof.

6. The method according to any one of the preceding Claims, wherein the method further comprises directly injecting the generated steam (C) (131) onto the oil-containing raw material comprising Fresh Fruit Bunches (FFB) in the sterilizer (11).

7. The method according to any one of the preceding Claims, wherein the method further comprises utilizing the generated steam (C) from water in the palm oil mill effluent (POME) in the digester (13) downstream of the sterilizer (11) and upstream of the pressing arrangement (14) and/or clarification tank (15) downstream of the digester and the pressing arrangement (14).

8. A system (100) for the production of crude palm oil comprising:
a device (10) for receiving and feeding a palm-oil containing raw material to a sterilizer (11) configured to utilize steam for the sterilizing,
downstream of the sterilizer (11) a thresher unit (12) to separate fruits from the raw material,
downstream of the thresher unit (12) a digester unit (13) for digesting the fruits,
downstream of the digester unit (13) a pressing arrangement (14) for the extraction of palm oil from the digested fruits,
downstream of the pressing arrangement (14) an oil clarification tank (15), and
downstream of the oil clarification tank (15) a crude oil separator (17),
downstream of the crude oil separator (17) a dryer unit (18), such as a vacuum dryer, to produce crude palm oil,
wherein the system further comprises:
a POME separator (26) for the separation of water (A) and solids (B) from a palm oil mill effluent (POME), produced as a residual sludge during the production of the crude palm oil,
a steam generator (21) configured to generate steam (C) from the water (A) separated from the palm oil mill effluent (POME), and
a feeding arrangement to feed the generated steam (C) to the sterilizer (11),
wherein the system further comprises a mill boiler (19) configured to generate and supply motive steam to the steam generator (21), and wherein the steam generator (21) is a separate device from the mill boiler (19).

9. The system according to Claim 8, wherein the POME separator (26) comprises at least one of a thermal separator comprising an evaporator and/or a distillation column, a physical separator comprising a membrane separator, a decanter and/or a centrifugal separator, or a combination thereof.

10. The system according to Claim 9, wherein the POME separator (26) is a thermal separator comprising an evaporator, and the mill boiler (19) is configured to generate and supply motive steam to the thermal POME separator (26).

11. The system according to Claim 10, wherein the evaporator is a single-effect or multiple-effect evaporation system, installed and operated as single or multiple units in series or in parallel.

12. The system according to claim any one of claims 8-11, wherein the digester unit (13) and/or the clarification tank (15) are/is configured to receive and utilize the generated steam (C).

13. The system according to any one of Claims 8-12, wherein the steam generator (21) comprises at least one of a plate heat exchanger, a shell and tube heat exchanger or a spiral heat exchanger, or a combination thereof.

14. The system according to any one of Claims 8-13, wherein the pressure of the generated steam (C) is in the range of 0 Barg to 50 Barg.

15. The system according to any one of Claims 8-14, wherein the sterilizer (11) comprises an injector device configured to inject the generated steam (C) onto the oil-containing raw material.

## Patentansprüche

1. Verfahren zum Herstellen von Rohpalmöl aus einem Palmöl enthaltenden Rohmaterial, das Frischfruchtbündel (FFB) umfasst, Aufnehmen und Einspeisen der Frischfruchtbündel (FFB) in einen Sterilisator (11), Sterilisieren des Rohmaterials in dem Sterilisator (11) mittels Dampf, Dreschen der Frischfruchtbündel (FFB) in einer Dreschereinheit (12), Vergären von Früchten in einer Vergärereinheit (13), und Pressen der Früchte in einer Pressanordnung (14), um Palmöl aus den vergorenen Früchten zu extrahieren, Klären des extrahierten Palmöls in einem Klärtank (15), Abscheiden des extrahierten Palmöls in einem Rohölabscheider (17), und Trocknen des extrahierten Palmöls in einer Trocknereinheit (18), um Rohpalmöl zu herzustellen, wodurch während der Herstellung ein Palmölmühlenabwasser (POME) als Restschlamm erzeugt wird, und das Verfahren ferner Folgendes umfasst:
(a) Abscheiden von Wasser (A) und Feststoffen (B) aus mindestens einem Teil des Abwassers der Palmölmühle (POME) durch Verwenden eines POME-Abscheiders (26);
(b) Einspeisen mindestens eines Teils des abgeschiedenen Wassers (A) in einen Dampferzeuger (21);
(c) Erzeugen von Dampf (C) in dem Dampferzeuger (21) durch Verwenden des abgeschiedenen Wassers (A);
(d) Einspeisen des erzeugten Dampfes (C) in den Sterilisator (11), wobei
das Verfahren ferner das Einspeisen von in einem Mühlenkessel (19) erzeugtem Treibdampf in den Dampferzeuger (21) umfasst, wobei der Dampferzeuger (21) eine vom Mühlenkessel (19) separate Vorrichtung ist.

2. Verfahren nach Anspruch 1, das ferner einen Schritt (e) des Verarbeitens der Feststoffe (B) aus dem POME-Abscheider (26) umfasst, um ölhaltige Nebenprodukte herzustellen oder einen Teil des in den Feststoffen (B) vorhandenen Öls zurückzugewinnen.

3. Verfahren nach einem der Ansprüche 1 oder 2, wobei der im Schritt (a) verwendete POME-Abscheider (26) einen thermischen Abscheider umfasst, und wobei das Verfahren ferner das Einspeisen von Treibdampf aus dem Mühlenkessel (19) in den thermischen Abscheider (26) umfasst.

4. Verfahren nach einem der Ansprüche 1, 2 oder 3, wobei der Mühlenkessel (19) einen Industriekessel umfasst, der eine Wärmequelle und einen Wärmetauscher umfasst.

5. Verfahren nach einem der vorhergehenden Ansprüche, wobei der Dampferzeuger (21) mindestens einen von einem Plattenwärmetauscher, einem Rohrbündelwärmetauscher oder einem Spiralwärmetauscher oder eine Kombination davon umfasst.

6. Verfahren nach einem der vorhergehenden Ansprüche, wobei das Verfahren ferner das direkte Einspritzen des erzeugten Dampfes (C) (131) auf das ölhaltige Rohmaterial, das Frischfruchtbündel (FFB) umfasst, im Sterilisator (11) umfasst.

7. Verfahren nach einem der vorhergehenden Ansprüche, wobei das Verfahren ferner das Verwenden des erzeugten Dampfes (C) aus dem Wasser im Palmölmühlenabwasser (POME) im Vergärer (13) stromabwärts des Sterilisators (11) und stromaufwärts der Pressanordnung (14) und/oder des Klärtanks (15) stromabwärts des Vergärers und der Pressanordnung (14) umfasst.

8. System (100) zur Herstellung von Rohpalmöl, Folgendes umfassend:
eine Vorrichtung (10) zum Aufnehmen und Einspeisen eines Palmöl enthaltenden Rohmaterials zu einem Sterilisator (11), der konfiguriert ist, um Dampf für die Sterilisierung zu verwenden,
stromabwärts des Sterilisators (11) eine Dreschereinheit (12) zum Trennen von Früchten vom Rohmaterial,
stromabwärts der Dreschereinheit (12) eine Vergärereinheit (13) zum Vergären der Früchte,
stromabwärts der Vergärereinheit (13) eine Pressanordnung (14) zur Extrahierung von Palmöl aus den vergorenen Früchten,
stromabwärts der Pressanordnung (14) einen Ölklärtank (15), und
stromabwärts des Ölklärtanks (15) einen Rohölabscheider (17),
stromabwärts des Rohölabscheiders (17) eine Trocknereinheit (18), wie z. B. ein Vakuumtrockner, zum Herstellen von Rohpalmöl,
wobei das System ferner Folgendes umfasst:
einen POME-Abscheider (26) für die Abscheidung von Wasser (A) und Feststoffen (B) aus dem Abwasser einer Palmölmühle (POME), das als Restschlamm während der Herstellung des Rohpalmöls hergestellt wird,
einen Dampferzeuger (21), der konfiguriert ist, um Dampf (C) aus dem Wasser (A) zu erzeugen, das aus dem Abwasser einer Palmölmühle (POME) abgeschieden wird, und
eine Einspeiseanordnung, um den erzeugten Dampf (C) in den Sterilisator (11) einzuspeisen, wobei das System ferner einen Mühlenkessel (19) umfasst, der konfiguriert ist, um Treibdampf zu erzeugen und dem Dampfgenerator (21) zuzuführen, und wobei der Dampfgenerator (21) eine vom Mühlenkessel (19) separate Vorrichtung ist.

9. System nach Anspruch 8, wobei der POME-Abscheider (26) mindestens einen von einem thermischen Abscheider, der einen Verdampfer und/oder eine Destillationskolonne umfasst, einem physikalischen Abscheider, der einen Membranabscheider, einen Dekanter und/oder einen Zentrifugalabscheider umfasst, oder eine Kombination davon umfasst.

10. System nach Anspruch 9, wobei der POME-Abscheider (26) ein thermischer Abscheider ist, der einen Verdampfer umfasst, und der Mühlenkessel (19) konfiguriert ist, um Treibdampf zu erzeugen und dem thermischen POME-Abscheider (26) zuzuführen.

11. System nach Anspruch 10, wobei der Verdampfer ein einfach wirkendes oder mehrfach wirkendes Verdampfungssystem ist, das als einzelne oder mehrere Einheiten in Reihe oder parallel installiert und betrieben wird.

12. System nach einem der Ansprüche 8 bis 11, wobei die Vergärereinheit (13) und/oder der Klärtank (15) konfiguriert ist/sind, um den erzeugten Dampf (C) aufzunehmen und zu verwenden.

13. System nach einem der Ansprüche 8 bis 12, wobei der Dampferzeuger (21) mindestens einen von einem Plattenwärmetauscher, einem Rohrbündelwärmetauscher oder einem Spiralwärmetauscher oder eine Kombination davon umfasst.

14. System nach einem der Ansprüche 8 bis 13, wobei der Druck des erzeugten Dampfes (C) im Bereich von 0 Bar/rel. bis 50 Bar/rel. liegt.

15. System nach einem der Ansprüche 8 bis 14, wobei der Sterilisator (11) eine Einspritzervorrichtung umfasst, die konfiguriert ist, um den erzeugten Dampf (C) auf das ölhaltige Rohmaterial einzuspritzen.

## Revendications

1. Procédé de production d'huile de palme brute à partir d'une matière première contenant de l'huile de palme comprenant des grappes de fruits frais (FFB), de réception et d'alimentation des grappes de fruits frais (FFB) dans un stérilisateur (11), de stérilisation de la matière première dans le stérilisateur (11) au moyen de vapeur d'eau, le battage des grappes de fruits frais (FFB) dans une unité de batteuse (12), de digestion de fruits dans une unité de digesteur (13), et de pressage des fruits dans un agencement de pressage (14) pour extraire de l'huile de palme des fruits digérés, de clarification de l'huile de palme extraite dans une cuve de clarification (15), de séparation de l'huile de palme extraite dans un séparateur d'huile brute (17), et de séchage de l'huile de palme extraite dans une unité de sécheur (18) pour produire de l'huile de palme brute, moyennant quoi, pendant la production, un effluent d'huilerie de palme (POME) est produit sous forme de boue résiduaire, et le procédé comprend en outre :
a) la séparation de l'eau (A) et de matières solides (B) à partir d'au moins une partie de l'effluent d'huilerie de palme (POME) en se servant d'un séparateur de POME (26) ;
b) l'alimentation d'au moins une partie de l'eau séparée (A) vers un générateur de vapeur (21) ;
c) la génération de vapeur (C) dans le générateur de vapeur (21) en utilisant l'eau séparée (A) ;
d) l'alimentation de la vapeur générée (C) dans le stérilisateur (11), dans lequel
le procédé comprend en outre l'alimentation de vapeur primaire générée dans une chaudière de fabrique (19) vers le générateur de vapeur (21), et dans lequel le générateur de vapeur (21) est un dispositif séparé de la chaudière de fabrique (19).

2. Procédé selon la revendication 1, comprenant en outre une étape e) de traitement des matières solides (B) du séparateur de POME (26) pour produire des sous-produits contenant de l'huile ou pour récupérer une partie de l'huile présente dans les matières solides (B).

3. Procédé selon l'une quelconque des revendications 1 ou 2, dans lequel le séparateur de POME (26) utilisé dans l'étape a) comprend un séparateur thermique, et dans lequel le procédé comprend en outre l'alimentation de vapeur primaire de la chaudière de fabrique (19) dans le séparateur thermique (26).

4. Procédé selon l'une quelconque des revendications 1, 2 ou 3, dans lequel la chaudière de fabrique (19) comprend une chaudière industrielle comprenant une source de chaleur et un échangeur de chaleur.

5. Procédé selon l'une quelconque des revendications précédentes, dans lequel le générateur de vapeur (21) comprend au moins l'un parmi un échangeur de chaleur à plaques, un échangeur de chaleur à calandre ou un échangeur de chaleur spiralé, ou une combinaison de ceux-ci.

6. Procédé selon l'une quelconque des revendications précédentes, dans lequel le procédé comprend en outre directement l'injection de la vapeur générée (C) (131) sur la matière première contenant de l'huile comprenant des grappes de fruits frais (FFB) dans le stérilisateur (11).

7. Procédé selon l'une quelconque des revendications précédentes, dans lequel le procédé comprend en outre l'utilisation de la vapeur générée (C) à partir de l'eau dans l'effluent d'huilerie de palme (POME) dans le digesteur (13) en aval du stérilisateur (11) et en amont de l'agencement de pressage (14) et/ou dans la cuve de clarification (15) en aval du digesteur et de l'agencement de pressage (14).

8. Système (100) de production d'huile de palme brute comprenant :
un dispositif (10) pour recevoir et alimenter une matière première contenant de l'huile de palme dans un stérilisateur (11) configuré pour utiliser de la vapeur d'eau pour la stérilisation,
en aval du stérilisateur (11), une unité de batteuse (12) pour séparer les fruits de la matière première,
en aval de l'unité de batteuse (12), une unité de digesteur (13) pour digérer les fruits,
en aval de l'unité de digesteur (13), un agencement de pressage (14) pour l'extraction d'huile de palme des fruits digérés,
en aval de l'agencement de pressage (14), une cuve de clarification d'huile (15), et
en aval de la cuve de clarification d'huile (15), un séparateur d'huile brute (17),
en aval du séparateur d'huile brute (17), une unité de sécheur (18), telle qu'un sécheur à vide, pour produire de l'huile de palme brute,
dans lequel le système comprend en outre :
un séparateur de POME (26) pour la séparation de l'eau (A) et de matières solides (B) à partir d'un effluent d'huilerie de palme (POME), produit sous forme de boue résiduaire pendant la production de l'huile de palme brute,
un générateur de vapeur (21) configuré pour générer de la vapeur (C) à partir de l'eau (A) séparée à partir de l'effluent d'huilerie de palme (POME), et
un agencement d'alimentation pour alimenter la vapeur générée (C) dans le stérilisateur (11), dans lequel le système comprend en outre une chaudière de fabrique (19) configurée pour générer et fournir de la vapeur primaire au générateur de vapeur (21), et dans lequel le générateur de vapeur (21) est un dispositif séparé de la chaudière de fabrique (19).

9. Système selon la revendication 8, dans lequel le séparateur de POME (26) comprend au moins l'un parmi un séparateur thermique comprenant un évaporateur et/ou une colonne de distillation, un séparateur physique comprenant un séparateur à membrane, un décanteur et/ou un séparateur centrifuge, ou une combinaison de ceux-ci.

10. Système selon la revendication 9, dans lequel le séparateur de POME (26) est un séparateur thermique comprenant un évaporateur, et la chaudière de fabrique (19) est configurée pour générer et fournir de la vapeur primaire au séparateur thermique de POME (26).

11. Système selon la revendication 10, dans lequel l'évaporateur est un système d'évaporation à simple effet ou à effet multiple, installé et exploité sous forme d'unités simples ou multiples en série ou en parallèle.

12. Système selon l'une quelconque des revendications 8 à 11, dans lequel l'unité de digesteur (13) et/ou la cuve de clarification (15) est/sont) configurée(s) pour recevoir et utiliser la vapeur générée (C).

13. Système selon l'une quelconque des revendications 8 à 12, dans lequel le générateur de vapeur (21) comprend au moins l'un parmi un échangeur de chaleur à plaques, un échangeur de chaleur à calandre ou un échangeur de chaleur spiralé, ou une combinaison de ceux-ci.

14. Système selon l'une quelconque des revendications 8 à 13, dans lequel la pression de la vapeur générée (C) est de 0 bars rel. à 50 bars rel.

15. Système selon l'une quelconque des revendications 8 à 14 dans lequel le stérilisateur (11) comprend un dispositif d'injecteur configuré pour injecter la vapeur générée (C) sur la matière première contenant de l'huile.
